# EUROPEAN PATENT SPECIFICATION

(11) **EP 2 321 945 B1**
(45) Date of publication and mention of the grant of the patent: **17.04.2013**
(21) Application number: 09781686.2
(22) Date of filing: 11.08.2009
(51) Int. Cl.: H04L 29/06

(54) **SYSTEM, METHOD, PROGRAM ELEMENT AND COMPUTER-ACCESSIBLE MEDIUM FOR FORWARDING MEDIA CONTROL MESSAGES**
SYSTEM, VERFAHREN, PROGRAMMELEMENT UND COMPUTERZUGÄNGLICHES MEDIUM ZUM WEITERLEITEN VON MEDIENKONTROLLNACHRICHTEN
SYSTÈME, PROCÉDÉ, ÉLÉMENT DE PROGRAMME ET SUPPORT ACCESSIBLE PAR ORDINATEUR POUR TRANSFÉRER DES MESSAGES DE COMMANDE MULTIMÉDIAS

(30) Priority: 11.08.2008 US 87896 P
(43) Date of publication of application: 18.05.2011
(73) Proprietor: Nokia Siemens Networks OY, 02610 Espoo (FI)
(72) Inventor: BELLING, Thomas, 85435 Erding (DE)
(86) International application number: PCT/EP2009/060360
(87) International publication number: WO 2010/018157

(56) References cited:
- EP-A- 1 739 900
- HUAWEI: "Use-cases and Requirements for Enhancement of Interworking between MTSI and Circuit Switched networks" 3GPP DRAFT; C3-081029, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Philadelphia; 20080701, 1 July 2008 (2008-07-01), XP050290061 [retrieved on 2008-07-01]

## Description

### FIELD OF THE INVENTION

The present invention relates to the technical field of telecommunication networks. In particular the present invention relates to a Media Gateway Control Apparatus/Arrangement, to a Media Gateway Apparatus, to a method for controlling a Media Gateway Apparatus by a Media Gateway Control Apparatus/Arrangement, a method for RTCP message handling in a Media Gateway Apparatus, to a program element, a computer-readable medium and use of an ITU-T H.248 protocol for configuring a Media Gateway Apparatus.

### BACKGROUND INFORMATION

Multimedia calls may be performed by using SIP (Session Initiation Protocol) as call control and IP/UDP/RTP (Internet Protocol/User Datagram Protocol/ Real-Time Transport Protocol) as media transport. The RTP protocol may be a protocol for Real-Time Applications.

For example, SIP may be used within the 3GPP (3rd Generation Partnership Project) Internet Multimedia Subsystem (IMS), which may be a subsystem for performing multimedia calls.

In combination with RTP, the RTP control protocol (RTCP) may be used to convey media related feedback and control messages.

In contrast, Multimedia calls in the 3GPP CS (circuit switched) domain may use the ITU-T H.324, with ITU-T H.245 as inband signalling protocol.

An interworking between H.324 and SIP for multimedia calls may be possible. The interworking may be performed by entities with a so-called split architecture between call control signalling handling and media handling. As an example the Media Gateway Control Function (MGCF) may control an attached Internet Multimedia Media gateway (IM-MGW) using the ITU-T H.248 protocol over the so-called Mn interface.

The H.245 call control protocol may be transparently forwarded by the IM-MGW to the MGCF and may be interworked with SIP/SDP (Session Initiation Protocol/Session Description Protocol) within the MGCF.

Some H.245 messages may be related to corresponding RTCP messages however no association between H.245 messages and RTCP messages may exit. Both messages may be handled in different entities in the split architecture.

The IETF document RFC3550 - "RTP: A Transport Protocol for Real-Time Applications", July 2003, describes RTP, the real-time transport protocol.

The IETF document RFC4585 - "Extended RTP Profile for Real-time Transport Control", July 2006, defines an extension to the Audio-visual Profile (AVP) that enables receivers to provide, statistically, more immediate feedback to the senders and thus allows for short-term adaptation and efficient feedback-based repair mechanisms to be implemented. This early feedback profile (AVPF) maintains the AVP bandwidth constraints for RTCP and preserves scalability to large groups.

The IETF document RFC5104 - "Codec Control Messages in the RTP Audio-Visual Profile", February 2008, specifies a few extensions to the messages defined in the Audio-Visual Profile with Feedback (AVPF).

The IETF document RFC3261 - "SIP: Session Initiation Protocol", June 2002, describes Session Initiation Protocol (SIP), an application-layer control (signalling) protocol for creating, modifying, and terminating sessions with one or more participants.

The ITU-T document of Telecommunication Standardization Sector of ITU, "H.324 - Terminal for low bit-rate multimedia Communication", (03/2002), describes terminals for low bit-rate multimedia communication, utilizing V.34 modems operating over the GSTN (General Switched Telephone Network). H.324 terminals may carry real-time voice, data, and video, or any combination, including videotelephony.

The ITU-T document of Telecommunication Standardization Sector of ITU, "H.245 - Control protocol for multimedia communication", (09/1989), describes syntax and semantics of terminal information messages as well as procedures to use them for in-band negotiation at the start of or during communication.

The ITU-T document of Telecommunication Standardization Sector of ITU,"H.248.1 - Gateway control protocol: Version 2", (05/2002), defines the protocols used between elements of a physically decomposed multimedia gateway.

The technical specification of 3GPP - Technical Specification Group Services and System Aspects, 3GPP TS 26.114, "IP Multimedia Subsystem (IMS); Multimedia Telephony; Media handling and interaction", Release 7, 08/2008, specifies a client for the Multimedia Telephony Service for IMS (MTSI) supporting conversational speech (including DTMF), video and text transported over RTP with the scope to deliver a user experience equivalent to or better than that of Circuit Switched (CS) conversational services using the same amount of network resources.

The technical specification of 3GPP - Technical Specification Group Core Network and Terminals, 3GPP TS 29.163, "Interworking between the IP Multimedia (IM) Core Network (CN)subsystem and Circuit Switched (CS) networks", Release 8, 05/2008, specifies the principles of interworking between the 3GPP IM CN subsystem and BICC/ISUP based legacy CS networks, in order to support IM basic voice, data and multimedia calls.

The document 3GPP TSG-CT WG3, C3-081029, "Use-cases and Requirements for Enhancement of Interworking between MTSI and Circuit Switched networks", for Meeting #48bis, Croatia, 23^{rd} - 27^{th} June 2008, discuss a proposal to interwork between IMS and CS.

The document 3GPP TSG-CT WG3, C3-081211, "Encoding formats, transport formats and media description signalling for interworking, QoE, and other enhancements to MTSI-MHI", for Meeting #48bis, Croatia, 23^{rd} - 27^{th} June 2008, discuss proposals to interwork at MGCF and IM-MGW.

The document 3GPP TSG-SA4, Tdoc S4-080419, "[DRAFT] LS Reply on possible interworking of MTSI parameters", for Meeting #49, USA, 30^{th} June - 3^{rd} July 2008, discuss possible interworking of MTSI parameters.
*Prior art can be found in document* EP 1 739 900 A*, disclosing a method for acquiring media stream Quality of Service (QoS) periodically. The Media Gateway Controller (MGC) sets an inspect duration during which the MGC periodically acquires the QoS information of the media stream, thereby timely acquiring the QoS information of the media stream and effectively controlling the media stream. Two ways for the MGC periodically acquiring the QoS information are provided. The Media Gateway (MG) actively submits the QoS information to the MGC and the MG submits the QoS information to the MGC according to the periodic request of the MGC.*

There may be a need to provide a more efficient interworking of RTCP messages and H.245 messages.

### SUMMARY OF EXEMPLARY EMBODIMENTS OF THE INVENTION

According to an exemplary embodiment of the present invention, a Media Gateway Control Apparatus, a Media Gateway Apparatus, a method for controlling a Media Gateway Apparatus, a method for RCTP message handling in a Media Gateway Apparatus, a program element, a computer-accessible medium and a use of an ITU-T H.248 protocol for configuring a Media Gateway Apparatus according to independent claims 1, 9, 15, 17 and 19 may be provided.

According to another exemplary embodiment of the present invention, a Media Gateway Control Apparatus/Arrangement for controlling a Media Gateway Apparatus may comprise a control device, a transceiver device and an interface device.

The control device may be adapted to exchange a control signal with a Media Gateway Apparatus via the interface device. The control signal may be adapted/provided to configure the Media Gateway Apparatus to forward at least one part of a first RTCP (RTP (Real-Time Transport Protocol) control protocol) packet to the Media Gateway Control Apparatus/Arrangement *upon receiving the RTCP packet.* The RTCP packet which may be forwarded may be of at least one RTCP packet type defined by the Media Gateway Control Apparatus/Arrangement. The at least one part of a first RTCP packet may also comprise the entire RTCP packet.

The transceiver device may be adapted, on receiving of the at least one part of the first RTCP packet from the Media Gateway Apparatus via the interface device to process the at least one part of the first RCTP packet.

In one exemplary embodiment, the transceiver device may be adapted/configured to process the at least one part of the first RTCP packet after receiving the at least one part or portion of the first RTCP package.

According to another exemplary embodiment of the present invention, a Media Gateway Apparatus for RTCP message handling comprising a control device, a transceiver device, a control interface device and an RTCP interface device may be provided.

The control device may be adapted/configured to exchange a control signal with a Media Gateway Control Apparatus/Arrangement via the control interface device. The control signal may be adapted to configure the Media Gateway Apparatus to forward at least one part of a first RTCP packet of at least one RTCP packet type defined by the Media Gateway Control Apparatus/Arrangement to the Media Gateway Control Apparatus/Arrangement. Thus, the Media Gateway Apparatus may transmit an entire first RTCP packet or at least a part of a first RTCP packet to the Media Gateway Control Apparatus/Arrangement.

In an exemplary embodiment of the present invention, the transceiver device may be adapted/configured, upon receiving of the first RTCP packet via the RTCP interface, to forward at least one part of the first RTCP packet via the control interface device to the Media Gateway Control Apparatus/Arrangement. Such at least one part of the first RTCP packet may be sent if the Media Gateway Apparatus determines that the received first RTCP packet is of a type, which the Media Gateway Control Apparatus/Arrangement may desire to handle.

According to another exemplary embodiment of the present invention, a method for controlling a Media Gateway Apparatus by a Media Gateway Control Apparatus/Arrangement may be provided. The exemplary method may comprise defining at least one desired RTCP packet type by the Media Gateway Control Apparatus/Arrangement. For example, the Media Gateway Control Apparatus/Arrangement may, as an example, define an RTCP packet type which the Media Gateway Control Apparatus/Arrangement may desire to handle.

The method may further comprise exchanging a control signal between the Media Gateway Control Apparatus/Arrangement and the Media Gateway Apparatus. This control signal may be adapted/provided to configure the Media Gateway Apparatus to forward at least one part of the first RTCP packet of the defined RTCP packet type to the Media Gateway Control Apparatus/Arrangement *upon receiving the RTCP packet.*

In one exemplary embodiment of the present invention, upon receiving of the at least one part of the first RTCP packet via the interface device of the Media Gateway Control Apparatus/Arrangement from the Media Gateway Apparatus, such at least one part of the first RTCP packet may be processed by the Media Gateway Control Apparatus/Arrangement.

According to another exemplary embodiment of the present invention, a method for RTCP message handling in a Media Gateway Apparatus may be provided. The exemplary method may comprise exchanging a control signal with the Media Gateway Control Apparatus/Arrangement via the control interface, wherein the control signal may be adapted to configure the Media Gateway Apparatus to forward at least one part of a first RTCP packet of at least one RTCP packet type. The RTCP packet type may be defined by the Media Gateway Control Apparatus/Arrangement.

Such at least one part of the first RTCP packet of at least one RTCP packet type defined by the Media Gateway Control Apparatus/Arrangement may be forwarded to the Media Gateway Control Apparatus/Arrangement from the Media Gateway Apparatus. Thus, in one exemplary embodiment, upon receiving of a first RTCP packet of the defined packet type via the RTCP interface of the Media Gateway Apparatus, the Media Gateway Apparatus may forward at least one part of the first RTCP packet type via the control interface device of the Media Gateway Apparatus to the Media Gateway Control Apparatus/Arrangement.

According to another exemplary embodiment of the present invention, a program element can be provided which, when executed by a processor, may be adapted to carry out at least one of the method for controlling a Media Gateway Apparatus and/or the method for RTCP message handling in a Media Gateway Apparatus.

According to yet another exemplary embodiment of the present invention a computer-readable/computer-accessible medium may be provided which can include a program code, which, when executed by a processor, is adapted/configured to carry out at least one of the method for controlling a Media Gateway Apparatus and/or the method for RTCP message handling in a Media Gateway Apparatus.

A computer-readable medium may be a floppy disk, hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e.g., the Internet, which may facilitate downloading a program code.

According to another exemplary embodiment of the present invention, the use of an ITU-T H.248 protocol for configuring a Media Gateway Apparatus to forward at least one part of a first RTCP packet to a Media Gateway Control Apparatus/Arrangement may be provided.

Interworking between IMS Subsystem and a CS platform may provide interworking of RTCP with H.245. Such interworking my be implemented at MGCF and IM-MGW or IMS Media Gateway.

As an example, an RTCP AVPF Picture Loss Indication (PLI) on the IMS side may interwork with the H.324M / H.245 videoFastUpdatePicture command.

In another example, RTCP AVPF Temporary Maximum Media Bit-rate Request (TMMBR) and Temporary Maximum Media Bit-rate Notification (TMMBN) messages on the IMS side may interwork with the H. 324M / H.245 flowControlCommand messages.

Such exemplary interworking may utilize dedicated Mn interactions between the MGCF and IM-MGW.

Such interworking or transforming may also facilitate an implementation of H.248 procedures to support the transfer of similar information as contained in the AVPF Picture Loss Indication (PLI), Temporary Maximum Media Bit-rate Request (TMMBR) and Temporary Maximum Media Bit-rate Notification (TMMBN) messages. AVPF PLI may be a message, with which a decoder may inform the encoder about the loss of an undefined amount of coded video data belonging to one or more pictures. With a TMMBR a receiver, translator, or mixer may request a sender to limit the maximum bit rate for a media stream to, or below, a provided value. The TMMBN may contain a media sender's current view of the most limiting subset of the TMMBR-defined limits it may have received, to help the participants to suppress TMMBRs that would not further restrict the media sender.

Further, RTCP may be designed in an extensible manner, including the possibility to have specific extensions for any new Codecs being added. Transforming information about extensions for any new codec, and transferring information related to other RTCP messages may be possible by configuring the Media Gateway Apparatus by the Media Gateway Control Apparatus/Arrangement.

It may be therefore desirable to avoid designing specific H.248 extension to transfer similar information as contained in the AVPF Picture Loss Indication, Temporary Maximum Media Bit-rate Request (TMMBR) and Temporary Maximum Media Bit-rate Notification (TMMBN) messages, but rather general H.248 extensions to transfer selected RTCP messages over H.248. Such selection may be made by setting filters in order to forward corresponding RTCP messages or packets to the Media Gateway Control Apparatus/Arrangement.

Implementing of a plurality of procedures related to information as contained in the AVPF Picture Loss Indication message, in the Maximum Media Bit-rate Request (TMMBR) message and in the Temporary Maximum Media Bit-rate Notification (TMMBN) message, may be prevented by defining desired packet types and configuring an filter accordingly. This can mean that filtering may prevent using several procedures and the rules for filtering may easily be adapted to future requirements on RTCP packets required in the Media Gateway Control Apparatus/Arrangement. In other words, extensions to a packet, e.g. extensions to an RTCP packet, may be handled with the proposed solution. The Media Gateway Control Apparatus/Arrangement may inform the Media Gateway Apparatus about the packets which the Media Gateway Control Apparatus/Arrangement may desire. The Media Gateway Control Apparatus/Arrangement in an example may inform the Media Gateway Apparatus about a pattern of a packet which the Media Gateway Apparatus may use to detect the desired packet.

Furthermore, this may mean, that a server, e.g., an MGCF, may configure the MGW such that the MGW may forward specific received RTCP packets in H.248 messages to the MGCF. The MGW configured in this manner may check after receiving an incoming RTCP Packet if the RTCP packet may be of the desired type. If the MGW may determine that the received RTCP packet may be desired by the server, the MGW may encapsulate the RTCP packet in an H.248 message and may forward the RTCP packet or a part of the RTCP packet to the server.

In another aspect of the invention, the server may request the MGW to send RTCP packets. The server may supply the RTCP packet embedded or encapsulated in a H.248 command or signal to the MGW. Upon Reception of such a request from the server, the MGW may send the RTCP packet or a corresponding modified RTCP packet.

In another exemplary embodiment of the present invention the transceiver device may be further adapted on occurring of a trigger for a second RTCP packet to send at least one part of the corresponding second RTCP packet via the interface device of the Media Gateway Control Apparatus/Arrangement to the Media Gateway Apparatus.

Such at least one part of the first packet and the at least one part of the second packet may be sent in opposite directions via the interface device.

The Media Gateway Control Apparatus/Arrangement may initiate a transfer of the second RTCP packet by providing a trigger, a trigger event or a trigger signal.

According to another exemplary embodiment of the present invention, the receipt of an RTCP packet may be independent from sending an RTCP packet. Furthermore, the receipt of an RTCP packet and sending an RTCP packet may also be independent from exchanging a control signal between a Media Gateway Control Apparatus/Arrangement and a Media Gateway Apparatus.

Thus, the Media Gateway Control Apparatus/Arrangement may comprise independent processes which may allow a multitasking operation. Thus, a rule which may be provided by defining a desired RTCP packet type may be provided from the Media Gateway Control Apparatus/Arrangement to the Media Gateway Apparatus while an already defined RTCP packet of a desired RTCP packet type may be sent from the Media Gateway Apparatus to the Media Gateway Control Apparatus/Arrangement. Thus, the processes may be executed in parallel or simultaneously.

According to another exemplary embodiment of the present invention, the RTCP packet type(s), which may be defined by the Media Gateway Control Apparatus, may be defined by at least one define criteria selected of a group of define criteria. The group of define criteria may consist of at least one bit pattern, of at least one defined position in the RTCP packet, of an ITU-T H.248 termination (ITU-T International Communication Union-T), of a combination of a Feedback Message Type (FMT) and a Payload Type (PT) of an RTCP packet, of a combination of a subtype and a payload type of an RTCP packet, of the version of an RTCP packet and of the RTCP "name" field.

As an example, the Media Gateway Control Apparatus/Arrangement may indicate one or several combinations of values of the bits 3-7 in the RTCP packet, e.g., the Feedback message type (FMT) or "subtype", and bits 8-15 in the RTCP packet, i.e. the Payload type (PT) RTCP header fields, for which combinations a forwarding of RTCP packets may be requested when those combinations may appear. Dependent on the RTCP PT, the bits 3-7 in the RTCP header may also be denoted by different names, for instance by the name "subtype" for the APP (Application-Defined) RTCP Packet type. In addition to the above-mentioned bits, the version bits 0-1 of the RTCP header may be added as filter criterion. For the APP RTCP packet type (PT= 204), the RTCP "name" field may be added as filter criterion.

In another exemplary embodiment, in order to request forwarding of an AVPF Picture Loss Indication (PLI) packet, the server or MGCF may configure a combination of PT=206 (Payload-specific FB message) and FMT=1. In yet another example in order to request forwarding of an AVPF Temporary Maximum Media Bit-rate Request (TMMBR) packet, the server may configure a combination of PT=205 (transport layer feedback message) and FMT=3. In a further example, in order to request forwarding of an AVPF Temporary Maximum Media Bit-rate Notification (TMMBN) packet, the server can configure a combination of PT=205 (transport layer feedback message) and FMT=4.

According to another exemplary embodiment of the present invention, the interface device may be based on the ITU-T H.248 standard. For example, the H-series standards defined by the ITU-T may concern audio visual and multimedia systems. The ITU-T H.248 standard may define an interface between the Media Gateway Control Apparatus/Arrangement (MGCF) and a Media Gateway Apparatus, e.g. an IMS Media Gateway (IP (Internet Protocol) Multimedia Subsystem Media Gateway) or an IM-MGW.

According to still another exemplary embodiment of the present invention, the exchange of a control signal may comprise at least one of a H.248 event in a H.248 add command, of a H.248 event in a H.248 mod command, of a H.248 event in a H.248 notify command, and/or a H.248 signal in a H.248 mod command. The H.248 add command may be a command defining adding an event, the H.248 mod command may define adding or modifying an event or a signal, a H.248 notify command may describe notifying an event.

In another exemplary embodiment, the server may use a H.248 event within a H.248 "Add" or "Mod" command to provide the desired combination or combinations of values of the Feedback message type (FMT) and/or Payload type (PT) RTCP header fields as EventsDescriptor Parameter to this event. This event descriptor parameter may be encoded as a bit pattern representing the bits 3-15 in the RTCP packet. The received RTCP packet or at least a part or at least parts of the received RTCP packet may be notified as ObservedEventsDescriptor parameter of the H.248 event. H.248 may define a mechanism to communicate between a Media Gateway Control Apparatus/Arrangement and a Media Gateway Apparatus therefore for exchanging a control signal a secure mechanism may be used by using the H.248 protocol.

According to another exemplary embodiment of the present invention, the part(s) of the first RTCP packet may be at least one part of a specific RTCP packet may include specific RTCP packets consisting of a picture loss indication packet, a TMMBR (Temporary Maximum Media Bit-Rate Request) packet, a TMMBN (Temporary Maximum Media Bit-Rate Notification), and/or an APP (Application-Defined RTCP Packet type) packet.

In addition to these specific exemplary RTCP packets, further specific RTCP packets which may already be defined or may be defined in the future can be indicated by the Media Gateway Control Apparatus/Arrangement to the Media Gateway Apparatus. Thus, if the Media Gateway Control Apparatus/Arrangement may desire to receive the specific RTCP packet for a further processing a rule or pattern for selecting the desired packet may be provided to the Media Gateway Apparatus. In other words, the Media Gateway Control Apparatus/Arrangement may set a filter in the Media Gateway Apparatus on a specific RTCP packet type in order to receive on an occurrence of such a specific RTCP packet type, the corresponding RTCP packet type in parts or as an entire RTCP packet.

Thus, specific RTCP packets, in particular specific RTCP packet types may be monitored by the MGW for forwarding the specific RTCP packets of the desired types for a further processing.

According to yet another exemplary embodiment of the present invention, a Media Gateway Control Apparatus/Arrangement may further comprise a further interface. The processing of the at least one part of the first RTCP packet may comprise generating a corresponding H.245 packet and sending the H.245 packet via the further interface. In another exemplary embodiment of the present invention occurring of a trigger for a second predefined RTCP packet may comprise receiving a H.245 packet via the further interface and generating a corresponding at least one part of a second RTCP packet. The further interface may be a H.245 interface. By generating a H.245 packet and sending the generated H.245 packet via the further interface, the Media Gateway Control Apparatus/Arrangement may be used as a gateway between RTCP packets received via the H.248 interface and a H.245 interface.

In the direction to a Media Gateway Apparatus on occurring or on receiving a H.245 packet via the further interface the Media Gateway Control Apparatus/Arrangement may generate at least one part of a corresponding second RTCP packet. This may facilitate a transformation of a H.245 packet in a corresponding RTCP packet. An occurrence of a trigger may also be generating in the Media Gateway Control Apparatus/Arrangement an RTCP packet and sending it via the H.248 interface to a Media Gateway Apparatus for sending the RTCP packet.

According to another exemplary embodiment of the present invention, the Media Gateway Control Apparatus/Arrangement may be further adapted to request the media gateway or the Media Gateway Apparatus to supply values for at least one part of the second RTCP packet. Supplying values for at least one part of the second RTCP packet within the Media Gateway Apparatus may facilitate the Media Gateway Control Apparatus/Arrangement to send only a part of a second RTCP packet. The complete RTCP packet may be generated in the Media Gateway Apparatus. This may allow reducing the payload via the H.248 interface. In another example the Media Gateway Apparatus overwrites values of a second RTCP packet. In addition to the second RTCP packet the Media Gateway Control Apparatus/Arrangement may transmit the information which values may be added or overwritten in the Media Gateway Apparatus.

According to yet another exemplary embodiment of the present invention, the Media Gateway Control Apparatus/Arrangement may be adapted/configured to supply at least one fix predefined value for the at least one part of the second RTCP packet in order to request the Media Gateway Apparatus to supply the at least one value for the part(s) of the second RTCP message. As an example, the server may request the Media Gateway Apparatus to supply the " synchronization source (SSRC)" value and add this value to the RTCP packet or RTCP message, because only the Media Gateway Apparatus may have knowledge about appropriate values for those parts of the RTCP message. Thus, the Media Gateway Apparatus may complete a second RTCP message received from the Media Gateway Control Apparatus/Arrangement before the Media Gateway Apparatus may send the second RTCP message to a receiver, for example to a terminal, a Mobile Station (MS), to a user terminal (UT) or a User Equipment (UE).

In another exemplary embodiment of the present invention, the transceiver device may be further adapted/configured, upon receiving of at least one part of a second RTCP packet via the control interface device, to process the at least one part of the second RTCP packet and to send a corresponding second RTCP packet via the RTCP interface.

According to yet another exemplary embodiment of the present invention, the receipt of the RTCP packet in the Media Gateway Apparatus may also be independent from sending an RTCP packet or from exchanging a control signal.

According to another exemplary embodiment of the present invention, the control interface device may be based on the ITU-T H.248 standard.

According to another exemplary embodiment of the present invention, further in the Media Gateway Apparatus exchanging a control signal may comprise at least one of a H.248 event in a H.248 add command, of a H.248 event in a H.248 mod command, of a H.248 event in a H.248 notify command, and/or a H.248 signal in a H.248 mod command.

According to another exemplary embodiment of the present invention, processing the at least one part of the second RTCP packet may comprise supplying at least one value for at least one part of the second RTCP packet.

As an example, the Media Gateway Apparatus may supply a value or values for at least one part of the second RTCP packet on the request of the Media Gateway Control Apparatus/Arrangement.

As another example, the Media Gateway Apparatus may always supply a value for at least one part of the second RTCP packet, i.e. without specific request of the Media Gateway Control Apparatus/Arrangement.

As yet another exemplary embodiment, if the Media Gateway Control Apparatus/Arrangement only supplied parts of the second RTCP packet, the Media Gateway Apparatus may complete the RTCP message by supplying a value or values for the missing parts. Thus, a packet provided by the Media Gateway Control Apparatus/Arrangement may be added with additional information or some values may be overwritten in order to prepare a complete second RTCP packet. Some values which may be added within the Media Gateway Apparatus may not be known within the Media Gateway Control Apparatus/Arrangement.

In other exemplary embodiment, values added within the Media Gateway Apparatus may be fixed values, e.g., always the same value may be added by the Media Gateway Apparatus, or values negotiated with remote partners by using RTCP, or values observed by the Media Gateway Apparatus by monitoring incoming or outgoing RTP packets. Furthermore, for example values may be derived by the Media Gateway Apparatus by internal means such as a system clock. In another example, the Media Gateway Apparatus may supply values for the "SSRC of packet sender" and for the "SSRC of media sender".

According to another exemplary embodiment of the present invention, processing the part(s) of the second RTCP packet may further comprise calculating a time when to send the second RTCP packet and sending the second RTCP packet at that calculated time. Calculating the time and waiting this time before a certain second RTCP packet may be sent via the RTCP interface device may allow to meet timing requirements for sending an RTCP packet defined by the RTCP protocol, for instance as defined in RFC 3550 and RFC 4585.

According to yet another exemplary embodiment of the present invention, the Media Gateway Apparatus may combine the RTCP packet with other RTCP packets and send them in a compound RTCP message.

In another exemplary embodiment of the present invention, upon an occurrence of a trigger for a second predefined RTCP packet, at least one part of the second RTCP packet may be sent or transmitted via the interface device of the Media Gateway Control Apparatus/Arrangement to the Media Gateway Apparatus.

In still another exemplary embodiment of the present invention, in the method for RTCP message handling on receiving of at least one part of a second RTCP packet via the control interface, the part(s) of the second RTCP packet may be processed by the Media Gateway Apparatus and the Media Gateway Apparatus may send a corresponding second RTCP packet via the RTCP interface.

Exemplary embodiments of the present invention and aspects of the invention have been described with reference to different subject-matters. In particular, some exemplary embodiments have been described with reference to apparatus type claims whereas other embodiments have been described with reference to method type claims. However, a person skilled in the art will gather from the above and the following description that unless other notified in addition to any combination between features belonging to one type of subject-matter also any combination between features relating to different subject-matters in particular between features of the apparatus claims and the features of the method claims may be considered to be disclosed with this application.

These and other aspects of the present invention will become apparent from and elucidated with reference to the embodiments described hereinafter.

### BRIEF DESCRIPTION OF THE DRAWINGS

Further objects, features and advantages of the present invention will become apparent from the following detailed description taken in conjunction with the accompanying figures showing illustrative exemplary embodiments of the present invention, in which:

Fig. 1 is a block diagram of a Media Gateway Control Apparatus/Arrangement according to an exemplary embodiment of the present invention;

Fig. 2 is a block diagram for a Media Gateway Apparatus according to an exemplary embodiment of the present invention;

Fig. 3 is a diagram of a communication network comprising the Media Gateway Control Apparatus/Arrangement and the Media Gateway Apparatus according to an exemplary embodiment of the present invention;

Fig. 4 is a message flow diagram for controlling the Media Gateway Apparatus by the Media Gateway Control Apparatus/Arrangement according to an exemplary embodiment of the present invention; and

Fig. 5 is a further message flow diagram for controlling the Media Gateway Apparatus by the Media Gateway Control Apparatus/Arrangement according to another exemplary embodiment of the present invention.

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments. It is intended that changes and modifications can be made to the described embodiments without departing from the true scope and spirit of the subject invention as defined by the appended claims.

### DETAILED DESCRIPTION OF EXEMPLARY EMBODIMENTS

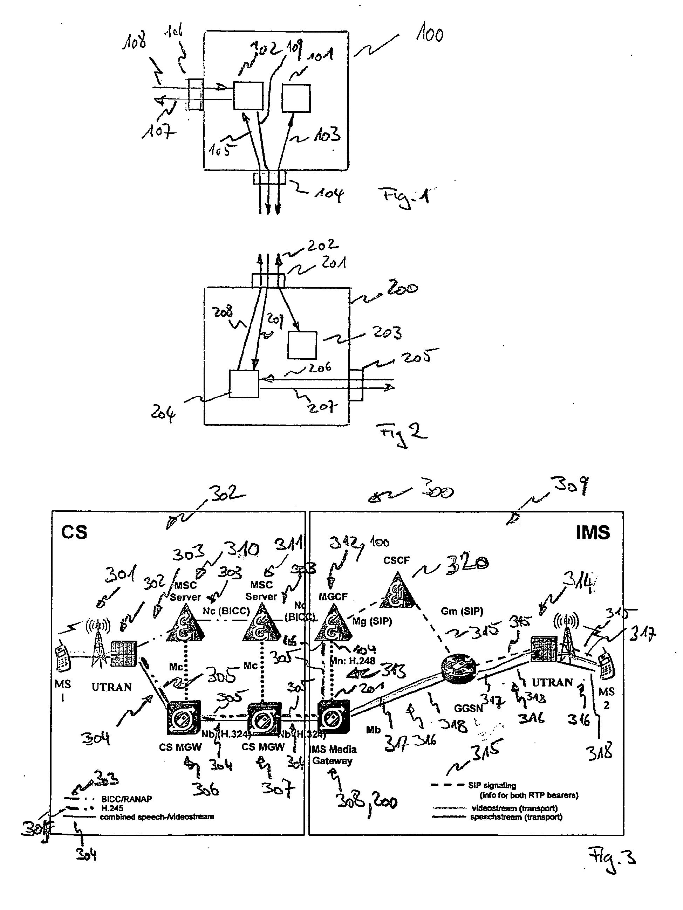

Fig. 1 shows a block diagram of a Media Gateway Control Apparatus/Arrangement 100 according to an exemplary embodiment of the present invention. The Media Gateway Control Apparatus/Arrangement 100 comprises the control device 101 and the transceiver device 102. A transceiver 102 may comprise a sending device and a receiving device, not shown in Fig. 1. The control device 101 and the transceiver device 102, e.g., the sending device and the receiving device can be three devices which may operate independently one from each other. In other words, the control device 101, the transceiver device 102 may be processes which run on separate processors.

The control device 101 or the controlling device 101 may generate control signals 103 which control signals can be sent in a virtual control connection 103 to a Media Gateway Apparatus, not shown in Fig. 1. The control signal 103 may comprise control information which may instruct a Media Gateway Apparatus to forward at least one part of an RTCP packet received by the Media Gateway Apparatus. This packet may be desired by the Media Gateway Control Apparatus/Arrangement 100.

The control connection 103 may be a virtual connection via the interface device 104. The interface device 104 may be an interface according to the ITU-T H.248 standard. The H.248 standard may define physical properties as well as logical properties on higher layers of the interface device 104 or interface 104.

The interface 104 can shared with the first virtual connection 105, which may transport a first RTCP packet of at least one RTCP packet type desired by the Media Gateway Control Apparatus/Arrangement. The RTCP packet which is received from the Media Gateway Apparatus via the virtual connection 105 may be encapsulated in a H.248 message.

The RTCP message received in the Media Gateway Control Apparatus/Arrangement 100, and in particular in the transceiver 102, may be processed within the Media Gateway Control Apparatus/Arrangement 100. Thus, the received RTCP packet is handled within the Media Gateway Control Apparatus/Arrangement 100.

If the first RTCP packet, or a part of it, received via virtual connection 105 is control information, such as a RTCP message, the transceiver device 102 can convert the received first RTCP packet into at least one corresponding other message, for instance into at least one other message selected from the group of messages consisting of a H.245 message, a SIP message, an ISUP message, a BICC message, and a H.248 message. The other message can be sent to a remote network node, not shown in Fig. 1, via the further interface device 106, in particular via the H.245 interface device 106. A H.248 message can also be sent to the Media Gateway Apparatus via the interface device 104.

For sending the other message to a remote node, the virtual connection 107 may be used.

Via the virtual connection 108 the transceiver device 102 can receive a message from a remote network node which may have to be converted into an RTCP message for sending it to an IMS system, for instance into H.245 message, or a SIP message, or an ISUP message, or a BICC message. In other words, via the virtual connection 108 the transceiver device can receive at least one message selected from the group of messages consisting of a H.245 message, a SIP message, an ISUP message and a BICC message, which can be converted into an RTCP message.

Receiving such a message within the transceiver device 102 may occur as a trigger within the Media Gateway Control Apparatus/Arrangement 100. However, receiving a H.248 message via the connection 105 within the transceiver device 102 may also occur as a trigger within the Media Gateway Control Apparatus/Arrangement. Further, internal events such as expiry of a timer may also occur as a trigger within the Media Gateway Control Apparatus/Arrangement. This trigger or this triggering event may make the transceiver device 102 to send a corresponding second RTCP packet via the virtual connection 109. The virtual connection 109 may also be a virtual connection over the H.248 interface 104.

Therefore, the Media Gateway Control Apparatus/Arrangement 100 can, e.g., be seen as a gateway for transforming messages according to the RTCP standard in corresponding messages according to the H.248 standard. Thus, the Media Gateway Control Apparatus/Arrangement may be a protocol converter. Receiving the H.245 message via virtual connection 108 and sending a H.245 message via virtual connection 107 may be seen as using a bidirectional connection over a bidirectional link 108, 107 via the H.245 interface 106. The virtual connections 108 and 109 may also be transported over the H.248 interface 104. In addition, receiving a first RTCP package via first virtual connection 105 and sending a second RTCP package on virtual connection 109 may be seen as transmitting and receiving an RTCP message via a bidirectional H.248 connection 105, 109 on a bidirectional link.

Another possibility of occurring of a trigger within the Media Gateway Control Apparatus/Arrangement 100 for sending a second RTCP package via virtual connection 109 may be when the Media Gateway Control Apparatus/Arrangement has generated a second RTCP packet. Via virtual connection 109, it may be possible to send only a part of the generated second RTCP packet, whereas additional information for the second RTCP packet may be added or finalized by a connected Media Gateway Apparatus. For example, the Media Gateway Control Apparatus/Arrangement can connect to a Media Gateway Apparatus via the interface device 104.

Fig. 2 shows a block diagram of a Media Gateway Apparatus 200 according to an exemplary embodiment of the present invention. The exemplary Media Gateway Apparatus 200 comprises the control interface 201, which may be a H.248 interface. The control interface device 201 may be used to connect to a Media Gateway Control Apparatus, not shown in Fig. 2. Via the virtual control connection 202, which may be a bidirectional connection, the control device 203 of the Media Gateway Apparatus may exchange a control signal with the Media Gateway Control Apparatus/Arrangement. The control signal may comprise control information, which control information may be used by a Media Gateway Control Apparatus/Arrangement to configure the Media Gateway Apparatus to forward at least one part of a first RTCP packet.

The control device 203 may control the transceiver device 204 of the Media Gateway Apparatus 200 to detect an RTCP package desired by the Media Gateway Control Apparatus/Arrangement on the RTCP interface 205 and to send the detected RTCP package, via the control interface device 201 to the Media Gateway Control Apparatus/Arrangement. In order to determine a corresponding desired first RTCP packet or first RTCP message, the control device 203 may set a filter in the transceiver device 204. Thus, the transceiver device 204 monitors the RTCP interface 205. The RTCP interface 205 may carry a bidirectional RTCP connection 206, 207 . In other words, the RTCP interface device 205 receives first RTCP packages from a remote node, which is not shown in Fig. 2, via the receiving virtual RTCP connection 206. Furthermore, the transceiver device 204 may transmit a second RTCP packet to a remote node via the sending virtual RTCP connection 207. Thus the receiving RTCP connection 206 and the transmitting RTCP connection 207 form a bidirectional RTCP connection 206, 207.

If the transceiver 204, e.g., a filter in the transceiver device 204 set by the control device 203, detects a defined bit pattern of a desired RTCP package, the RTCP package may be sent via the virtual H.248 connection 208 via the H.248 interface 201 or the control interface device 201 to a Media Gateway Control Apparatus/Arrangement. The packet transmitted via the virtual connection 208 may comprise the entire received first RTCP package or at least a part of the received first RTCP packet. By sending only a part of a RTCP package the payload via the H.248 interface 201 may be reduced. Received RTCP packets which are not sent to a Media Gateway Control Apparatus/Arrangement may be processed by the transceiver device 204 or forwarded to other devices within the Media Gateway Apparatus 200 for processing.

The transceiver device 204 may map a RTCP packet into a corresponding H.248 packet. For example. the transceiver device encapsulates the first RTCP packet in a H.248 packet.

The transceiver device 204 can receive via the second virtual H.248 connection 209 a second RTCP packet or at least a part of a second RTCP packet. This second RTCP packet may be received encapsulated in a H.248 message. The received second RTCP packet may be processed by the transceiver device 204 and the second RTCP packet or a modified second RTCP packet may be sent via the outgoing RTCP connection 207. Before sending the second RTCP packet the transceiver device may calculate a time, in order to meet timing requirements of the RTCP interface 205.

Furthermore, the transceiver device 204 may add additional values to the part(s) of second RTCP packet or may overwrite some values before sending the second RTCP packet via the RTCP interface 205. The transceiver device 204 may receive multiple other triggers to send RTCP packets to a remote node via the virtual RTCP connection 207, such as, e.g., the setup or termination of an RTP connection or the occurrence of data about an RTP connection, or the occurrence of abnormal situations such as packet loss at an RTP connection, or the expiry of some internal timer.

Fig. 3 shows a diagram of a telecommunication network 300 according to an exemplary embodiment of the present invention which facilitates a mobile station MS1 to communicate with another mobile station MS2. The mobile station MS1 connects to a UTRAN (UMTS (Universal Mobile Telecommunications System) Terrestrial Radio Access Network) base station 301 of a CS (Circuit Switch) domain 302. In the CS base station 302, signals received from MS1 may be split into control information 303 and into CS payload 304. The CS payload 304 comprises combined speech stream and video stream information. In the 3GPP CS domain 302 the CS payload 304 uses the ITU-T H.324 protocol to transport the combined speech stream and video stream information with ITU-T H.245 used as inband signalling protocol for the CS inband signalling channel 305.

The combined speech stream and video stream CS payload data 304 and the inband signalling information 305 are sent over the first CS MGW (Circuit Switched Media Gateway) 306 and the second CS MGW 307 to the IMS (IP Multimedia Subsystem) Media Gateway 200, 308 which is located in the IMS (IP Multimedia Subsystem) domain 309. The control information for the connection from MS1 or the outband control information 303 can be transmitted via the first MSC (Mobile Switching Centre) server 310 and the second MSC server 311 to the Media Gateway Control Function 312 or the Media Gateway Control Apparatus/Arrangement 312, which is also located in the IMS domain 309.

Between the first MSC server 310, the second MSC server 311 and the MGCF the outband signalling information 303 is transmitted via the Nc interface using BICC (Bearer Independent Call Control), or ISUP (ISDN (Integrated Services Digital Network) User Part), or SIP. The combined CS speech stream/video stream 304 and the inband signalling information 305 use between the first CS MGW and the second CS MGW 307 and the IMS Media Gateway 308 the Nb interface according to H.324. The first MSC server 310 controls the first CS MGW 306 using the Mc interface and the second MSC server 311 controls the second CS MGW 307 via the Mc interface.

The IMS Media Gateway 308 can transparently forward the H.245 call control protocol 305 to the Media Gateway Control Function (MGCF) 100, 312. The CS inband signalling information 305 is sent from the IMS Media Gateway 200, 308 or the IM-MGW (Internet Multimedia - Media Gateway) 200, 308 via the MN interface using the H.248 protocol. The inband signalling information 305 is connected to the MGCF via the further interface 106. The MGCF 100 controls the IMS MGW 200 via the interface devices 104, 201.

In the IMS domain 309, the MS2 can connect to the second UTRAN base station 314. Multimedia calls from MS2 use the SIP (Session Initiated Protocol) 315 protocol as call control and the calls use at least one of IP/UDP/RTP 316 (Internet Protocol/User Data Protocol/Real-Time Transport Protocol) as media transport 316 protocol. The RTP media stream 316 can comprise the video transport stream 317 and the speech transport stream 318. However, some RTCP info, which may be comprised in an RTCP packet 316 may also be desired in the MGCF 100. Thus, via the interface devices 104, 201 the MGCF can control the IMS Media Gateway 200 such, that the IMS Media Gateway sends to the MGCF predefined RTCP packets as desired by the MGCF 100. The MGCF 100 may need the RTCP packets 316 or the RTCP messages 316 in order to interwork with H.245 messages 305.

The desired RTCP packages may be sent via the H.248 link 313 in particular in a first virtual connection in the H.248 link 313 from the IMS Media Gateway 200 to the MGCF 100. The H.248 link 313 may also transport a control signal 103, 202 (not shown in Fig. 3), a first RTCP packet 208, 105 and a second RTCP packet 109, 209 (first and second RTCP packet are also not shown in Fig. 3). The control signal 103 may also be a virtual connection on the H.248 link 313. If the MGCF 100, 312 receives via the inband signalling link 305 H.245 messages or via the outband link 303 other control messages, which may have to interwork with RTCP messages, the MGCF 100 can generate a corresponding second RTCP packet, sends this second RTCP packet via the H.248 link 313 to the IMS Media Gateway 200. On receiving the second RTCP packet the IMS Media Gateway 200 transmits the second RTCP packet to the destination, for example the MS2.

Thus, the MGCF may be used as gateway which transforms H.245 messages or other control messages into RTCP messages and vice versa. Thus, an interworking between the H.245 protocol and the RTCP protocol may be achieved.

The server (MGCF) 100, 312 can configure the MGW 200, 308 to forward specific received RTCP packets in H.248 messages to the MGCF 100, 312. The server 100, 312 performs this configuration by indicating for which H.248 termination it applies and by indicating the combination or combinations of values of the bits 3-7 in the RTCP packet, i.e. the Feedback message type (FMT), and bits 8-15 in the RTCP packet, i.e. the Payload type (PT) RTCP header fields, for which a forwarding of RTCP packets is requested. Dependent on the RTCP PT, the bits 3-7 corresponding to the feedback message type in the RTCP header may also be denoted by another name, for instance by the name "subtype" for the APP (Application-Defined) RTCP Packet type. Generally the bits 3-7 of an RTCP packet can be used as filter criterion. In addition to the bits above (bits 3-7), the version bits 0-1 of the RTCP header may be added as filter criterion. For the APP RTCP packet type (PT= 204), the RTCP "name" field is added as filter criterion in a preferred embodiment.

The server 100, 312 can use an exemplary H.248 event within a H.248 "Add" command or within a H.248 "Mod" command to perform this configuration. The definition of the proposed H.248 event comprises at least one EventsDescriptor Parameter to describe filter criteria to be applied at the Media Gateway apparatus and at least one ObservedEventsDescriptor Parameter to convey at least parts of RTCP packets. The descriptor parameter may be encoded as bit pattern representing the bits 3-15 in the RTCP packet.

For example, to request that a AVPF Picture Loss Indication (PLI) packet is forwarded, the server 100, 312 needs to configure a combination of PT=206 (Payload-specific FB message) and FMT=1. To request that a AVPF Temporary Maximum Media Bit-rate Request (TMMBR) packet is forwarded, the server should configure a combination of PT=205 (transport layer feedback message) and FMT=3. To request that a AVPF Temporary Maximum Media Bit-rate Notification (TMMBN) packet is forwarded, the server needs to configure a combination of PT=205 (transport layer feedback message) and FMT=4.

A MGW 200, 308 configured in this manner checks after receiving an incoming RTCP Packet if it is of the desired type. An incoming RTCP message can be of compound format and contain several RTCP packets. The MGW 200, 308 can then perform the check separately for each packet. The MGW 200, 308 may compare the values of the Feedback message type (FMT) and Payload type (PT) RTCP header with the combination of values it has previously received from the server 100, 312. If the MGW determines that the received RTCP packet is desired by the server 100, 312, the MGW 200, 308 encapsulates the RTCP packet in an H.248 message 208,105 and forwards it to the server 100, 312.

In one exemplary embodiment, the IM-MGW 200, 308 can forward the complete RTCP packet, but in an alternative embodiment the IM-MGW 200, 308 may also omit RTCP header fields without significance for the server 100, 312 such as the SSRC and CSRC header fields to shorten the packet. The MGW may use a H.248 "Notify" message to transport RTCP packet and indicates the new event within and includes RTCP packet as ObservedEventsDescriptor Parameter of this event.

It may be difficult or inappropriate to forward all RTCP messages to the server, as this would lead to significant load on the H.248 interface and the server, however, most of the RTCP messages may be of no significance to the server 100, 312 and can be processed locally at the MGW 200, 308.

In another exemplary embodiment of the present invention, the server 100, 312 can request the MGW 200, 308 to send RTCP packets. The server may supply the RTCP packet embedded in H.248 command 109, 209 to the MGW 200, 308. The server 100, 312 can use a proposed H.248 signal for this purpose, and transport this signal within a H.248 "Modify" message. The definition of this proposed H.248 signal comprises at least one parameter to contain the RTCP packet. The server 100, 312 can denote the desired destination MS1, MS2 of the RTCP packet by indicating the H.248 termination from where the RTCP packet shall be sent by the MGW 200, 308.

The server 100, 312 may not have sufficient information to fill certain field in the RTCP packet, such as "synchronization source (SSRC) identifier". In one exemplary embodiment, the sender fields or fills such fields with a predefined value to request that the MGW supplies those fields. Upon reception of such a request from the server 100, 312, the MGW 200, 308 can send the RTCP packet 207. The MGW may overwrite some message fields within the received RTCP packet, such as the "SSRC of packet sender" and "SSRC of media sender", to supply appropriate values. The MGW 200, 308 may combine the RTCP packet with other RTCP packets and send them in a compound RTCP message 307. The MGW may defer sending the RTCP packet 307 or compound RTCP message 307 to comply with timing rules for sending RTCP messages.

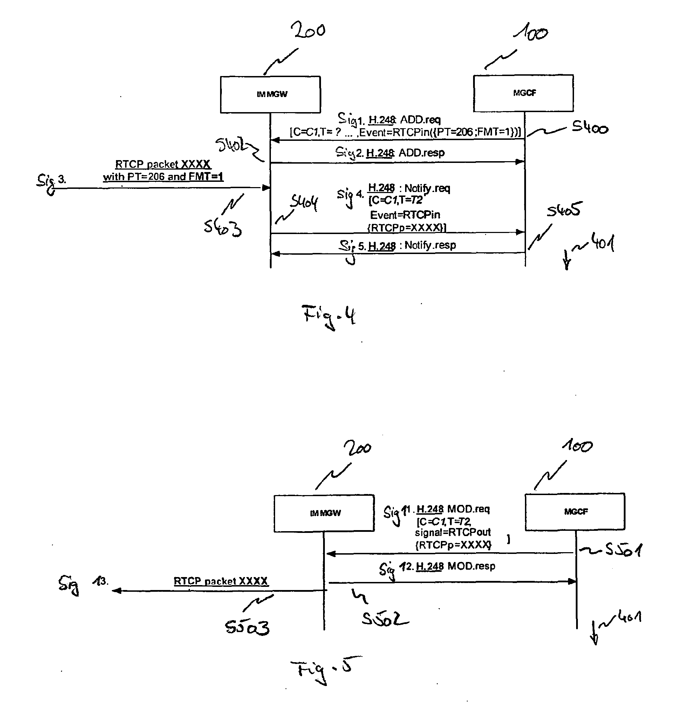

Fig. 4 shows a message flow diagram for Mn interactions for receiving an RTCP packet in the MGW 200, 308 according to an exemplary embodiment of the present invention. MGCF 100 and the MGW 200 are shown in Fig. 4 as entities which exchange control signals. The time is indicated as arrow 401.

For example, in step S400, in signal Sig1, the MGCF 100 requests the IM-MGW 200 to detect received RTCP packet of payload type 206 and feedback message type 1, e.g., a Picture Loss Indication (PLI) from the IMS side and forwards the packets or corresponding bit pattern to the MGCF. In order to request the IM-MGW 200 to detect and forward these RTCP packets or these first RTCP packets, the MGCF 100 sends the proposed H.248 event "RTCPin" to the IM-MGW. The event may be indicated through an H.248 ADD command. For example Sig1 is an ADD.req [C=C1, T=?...,Event = RTCPin ({PT=206; FMT=1})] command.

Sig2, in step S401, confirms the reception of the ADD command. In step S402, in signal Sig3, the IM-MGW receives an RTCP packet of payload type 206 and feedback message type 1 from the IMS side 309 (not shown in Fig. 4). Upon reception of this packet, the IM-MGW checks if the payload type and feedback message type of the RTCP packet match a value pair as requested by the MGCF (in the example:yes).

In step S404, the IM-MGW forwards the RTCP packet to the MGCF within an H.248 Notify command (signal Sig4). This Notify command has the form of Notify.req [C=C1, T=T2 Event= RTCPin{RTCPp=XXXX}]. In step S405, the reception of the signal Sig4 is confirmed with a Notify.resp Sig5.

Fig. 5 shows an Mn interaction for sending RTCP packets according to an exemplary embodiment of the present invention.

For example, in step S501 in Signal Sig11, the MGCF requests the IM-MGW to send an RTCP packet. To request the IM-MGW to send a RTCP packet, the MGCF sends the proposed H.248 signal "RTCPout" to the IM-MGW with the complete RTCP packet XXXX as parameter within a H.248 MOD request. The signal Sig11 has the form MOD.req [C=C1, T=T2, signal=RTCPout {RTCPp=XXXX}]. XXXX is a placeholder for the corresponding RTCP packet, which has to be transmitted. The IM MGW confirms the receipt of Sig11 with a MOD.rsp message Sig12 in step S502. Upon the receipt of the request signal Sig11, the IM-MGW in step S503 sends the encapsulated RTCP packet out at the designated termination (signal Sig13).

The MGW may overwrite some message fields within the received RTCP packet, such as the "SSRC of packet sender" and "SSRC of media sender", to supply appropriate values. The MGW may combine the RTCP packet with other RTCP packets and transmit them in a compound RTCP message. The MGW may defer sending the RTCP packet or compound RTCP message to comply with timing rules for sending RTCP messages.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

The foregoing merely illustrates the principles of the invention. Various modifications and alterations to the described embodiments will be apparent to those skilled in the art in view of the teachings herein. It will thus be appreciated that those skilled in the art will be able to devise numerous systems, arrangements and methods which, although not explicitly shown or described herein, embody the principles of the invention. In addition, to the extent that the prior art knowledge has not been explicitly incorporated by reference herein above, it is explicitly being incorporated herein in its entirety.

### Exemplary Acronyms and Terminology

- APP: Application-Defined RTCP Packet type
- AVPF: RTP Audio-Visual Profile with Feedback
- BICC: Bearer Independent Call Control
- CS: Circuit Switched
- FMT: Feedback message type
- MGCF: Media Gateway Control Function
- MGW: Media Gateway
- PLI: Picture Loss Indication
- PT: Payload type
- RTCP: Real-Time Transport Control Protocol
- RTP: Real-Time Transport Protocol
- SSRC: synchronization source
- TMMBR: Temporary Maximum Media Bit-rate Request
- TMMBN: Temporary Maximum Media Bit-rate Notification

## Claims

1. A media gateway control arrangement (100) for controlling a media gateway apparatus (200), comprising:
a control device (101);
a transceiver device (102); and
an interface device (104),
wherein the control device (101) is configured to exchange a control signal with a media gateway apparatus (200) via the interface device (104),
wherein the control signal is provided to configure the media gateway apparatus (200) to forward at least one part of a Real-Time Transport Control Protocol RTCP packet of at least one RTCP packet type defined by the media gateway control arrangement (100) to the media gateway control apparatus (100) upon receiving the RTCP packet, and
wherein the transceiver device (102) is configured, upon receiving the at least one part of the first RTCP packet from the media gateway control apparatus (100) via the interface device (104) to process the at least one part of the first RTCP packet.

2. The media gateway control arrangement (100) of claim 1, wherein the transceiver device (102) is further configured on occurring of a trigger for a further RTCP packet to send at least one part of the further RTCP packet via the interface device (104) to the Media Gateway Control Apparatus/Arrangement (100).

3. The media gateway control arrangement (100) of claim 1 or 2, wherein the at least one RTCP packet type defined by the media gateway control arrangement (100) is defined by at least one criteria which is at least one of (i) at least one bit pattern, (ii) at least one defined position in the RTCP packet, (iii) a H.248 termination, (iv) a combination of a Feedback Message Type and a Payload Type of an RTCP packet, (v) a combination of a Subtype and a Payload Type of an RTCP packet, (vi) a version of the RTCP packet, and (vii) a RTCP "name" field.

4. The media gateway control arrangement (100) of any one of claims 1 to 3, wherein the control signal is exchanged by at least one of (i) a H.248 event in a H.248 Add command, (ii) a H.248 event in a H.248 Mod command, (iii) a H.248 event in a H.248 Notify command, or (iv) a H.248 signal in a H.248 Mod command.

5. The media gateway control arrangement (100) of any one of claims 1 to 4, wherein the at least one part of the RTCP packet is at least one specific RTCP packet which includes at least one of (i) specific RTCP packets consisting of a Picture Loss Indication packet, (ii) a TMMBR packet, a TMMBN packet, or (iii) an APP packet.

6. The media gateway control arrangement (100) of any one of claims 2 to 5, further comprising:
a further interface (106),
wherein at least one of:
a. the at least one part of the RTCP packet is processed by generating a corresponding H.245 packet and transmitting the H.245 packet via the further interface (106), or
b. a trigger for a further predefined RTCP packet occurs by receiving a H.245 packet via the further interface (106) and generating at least one part of the second RTCP packet.

7. The media gateway control arrangement (100) of any one of claims 2 to 6, wherein the media gateway control arrangement (100) is configured to request the media gateway apparatus (200) to provide values for at least one part of the further RTCP packet.

8. The media gateway control arrangement (100) of any one of claims 2 to 7, wherein the media gateway control arrangement (100) is configured to provide at least one fix predefined value for the at least one part of the further RTCP packet to request the media gateway apparatus (200) to provide the at least one value for the at least one part of the further RTCP message.

9. A media gateway apparatus (200) for handling at least one Real-Time Transport Control Protocol RTCP message, comprising:
a control device (203);
a transceiver device (204);
a control interface device (201); and
an RTCP interface device (205),
wherein the control device (203) is configured to exchange a control signal with a media gateway control arrangement (100) via the control interface device (201),
wherein the control signal is provided to configure the media gateway apparatus (200) to forward at least one part of a RTCP packet of at least one RTCP packet type defined by the media gateway control arrangement (100) to the media gateway control apparatus (100), and
wherein the transceiver device (204) is configured, upon receiving the first RTCP packet via the RTCP interface device (205), to forward at least one part of the RTCP packet via the control interface device (201) to the media gateway control arrangement (100).

10. The media gateway apparatus (200) of claim 9, wherein the transceiver device (204) is further configured to receive at least one part of a further RTCP packet via the control interface device (201) to process the at least one part of the further RTCP packet and transmit a corresponding further RTCP packet via the RTCP interface (205).

11. The media gateway apparatus (200) of claim 9 or 10, wherein the at least one RTCP packet type defined by the media gateway control arrangement (100) is defined by at least one criteria which is at least one of (i) at least one bit pattern, (ii) at least one defined position in the RTCP packet, (iii) a H.248 termination, (iv) a combination of a Feedback Message Type and a Payload Type of an RTCP packet, (v) a combination of a Subtype and a Payload Type of an RTCP packet, (vi) a version of the RTCP packet, and (vii) a RTCP "name" field.

12. The media gateway apparatus (200) of any one of claims 9 to 11, wherein the control signal is exchanged by at least one of (i) a H.248 event in a H.248 Add command, (ii) a H.248 event in a H.248 Mod command, (iii) a H.248 event in a H.248 Notify command, or (iv) a H.248 signal in a H.248 Mod command.

13. The media gateway apparatus (200) of any one of claims 10 to 12, wherein the at least one part of the further RTCP packet is processed by supplying at least one value for at least one part of the further RTCP packet.

14. The media gateway apparatus (200) of any one of claims 9 to 13, wherein the at least one part of the further RTCP packet further processed by calculating a time when to transmit the further RTCP packet and transmitting the further RTCP packet at such calculated time.

15. A method for controlling a media gateway apparatus (200) by a media gateway control arrangement (100), comprising:
defining at least one desired Real-Time Transport Control Protocol RTCP packet type by the media gateway control arrangement (100);
exchanging a control signal between the media gateway control arrangement (100) and the media gateway apparatus (200), wherein the control signal is provided to configure the media gateway apparatus to forward at least one part of a RTCP packet of the defined RTCP packet type to the media gateway control arrangement upon receiving the RTCP packet; and
processing the least one part of the RTCP packet, upon receiving of the at least one part of the RTCP packet via the interface device, from the media gateway apparatus (200).

16. The method of claim 15, further comprising:
transmitting at least one part of a further RTCP packet via the interface device (104) to the media gateway apparatus (200), upon an occurrence of a trigger, for the further RTCP packet.

17. A method for handling at least one Real-Time Transport Control Protocol RTCP message in a media gateway apparatus (200), comprising:
exchanging a control signal with a media gateway control arrangement (100) via a control interface device, wherein the control signal is provided to configure the media gateway apparatus to forward at least one part of a RTCP packet of at least one RTCP packet type defined by the media gateway control arrangement to the media gateway control arrangement (100); and
forwarding at least one part of the RTCP packet via the control interface device to the media gateway control arrangement (100), upon receiving of the RTCP packet of the defined packet type via an RTCP interface.

18. A method of claim 17, further comprising:
processing of at least one part of a further RTCP packet and transmitting the further RTCP packet via the RTCP interface, upon receiving of the at least one part of the further RTCP packet, via the control interface device.

19. A computer program product comprising code means adapted to produce steps of any of claims 15-18 when loaded into the memory of a computer.

## Patentansprüche

1. Medien-Gateway-Steueranordnung (100) zum Steuern einer Medien-Gateway-Vorrichtung (200), die Folgendes umfasst:
eine Steuervorrichtung (101);
eine Sender/Empfänger-Vorrichtung (102); und
eine Schnittstellenvorrichtung (104),
wobei die Steuervorrichtung (101) konfiguriert ist, ein Steuersignal mit einer Medien-Gateway-Vorrichtung (200) über die Schnittstellenvorrichtung (104) auszutauschen,
wobei das Steuersignal geliefert wird, um die Medien-Gateway-Vorrichtung (200) zu konfigurieren, mindestens einen Teil eines Echtzeittransportsteuerprotokoll-Pakets, RTCP-Pakets, eines durch die Medien-Gateway-Steueranordnung (100) definierten RTCP-Pakettyps nach Empfangen des RTCP-Pakets an die Medien-Gateway-Steuervorrichtung (100) weiterzuleiten, und
wobei die Sender/Empfänger-Vorrichtung (102) konfiguriert ist, nach Empfangen des mindestens einen Teils des ersten RTCP-Pakets von der Medien-Gateway-Steuervorrichtung (100) über die Schnittstellenvorrichtung (104) den mindestens einen Teil des ersten RTCP-Pakets zu verarbeiten.

2. Medien-Gateway-Steueranordnung (100) nach Anspruch 1, wobei die Sender/Empfänger-Vorrichtung (102) ferner konfiguriert ist, bei Auftreten eines Auslösers für ein weiteres RTCP-Paket mindestens einen Teil des weiteren RTCP-Pakets über die Schnittstellenvorrichtung (104) an die Medien-Gateway-Steuervorrichtung/-anordnung (100) zu senden.

3. Medien-Gateway-Steueranordnung (100) nach Anspruch 1 oder 2, wobei der mindestens eine durch die Medien-Gateway-Steueranordnung (100) definierte RTCP-Pakettyp durch mindestens einen Faktor definiert ist, der mindestens einer ist von: (i) mindestens einem Bitmuster, (ii) mindestens einer definierten Position in dem RTCP-Paket, (iii) einem H.248-Abschluss, (iv) einer Kombination eines Rückkopplungs-Nachrichtentyps und eines Nutzlast-Typs eines RTCP-Pakets, (v) einer Kombination eines Subtyps und eines Nutzlast-Typs eines RTCP-Pakets, (vi) einer Version des RTCP-Pakets und (vii) eines RTCP-"Namen"-Feldes.

4. Medien-Gateway-Steueranordnung (100) nach einem der Ansprüche 1 bis 3, wobei das Steuersignal durch mindestens eines der Folgenden ausgetauscht wird: (i) einem H.248-Ereignis in einem H.248-Add-Befehl, (ii) einem H.248-Ereignis in einem H.248-Mod-Befehl, (iii) einem H.248-Ereignis in einem H.248-Notify-Befehl oder (iv) einem H.248-Signal in einem H.248-Mod-Befehl.

5. Medien-Gateway-Steueranordnung (100) nach einem der Ansprüche 1 bis 4, wobei der mindestens eine Teil des RTCP-Pakets mindestens ein bestimmtes RTCP-Paket ist, das mindestens eines der Folgenden enthält: (i) bestimmte RTCP-Pakete, die aus einem Bildverlustangabe-Paket bestehen, (ii) einem TMMBR-Paket, einem TMMBN-Paket oder (iii) einem APP-Paket.

6. Medien-Gateway-Steueranordnung (100) nach einem der Ansprüche 2 bis 5, die ferner umfasst:
eine weitere Schnittstelle (106),
wobei mindestens eines von
a. dem mindestens einen Teil des RTCP-Pakets durch Erzeugen eines entsprechenden H.245-Pakets und Senden des H.245-Pakets über die weitere Schnittstelle (106) verarbeitet wird oder
b. einem Auslöser für ein weiteres vorbestimmtes RTCP-Paket durch Empfangen eines H.245-Pakets über die weitere Schnittstelle (106) und Erzeugen mindestens eines Teils des zweiten RTCP-Pakets eintritt.

7. Medien-Gateway-Steueranordnung (100) nach einem der Ansprüche 2 bis 6, wobei die Medien-Gateway-Steueranordnung (100) konfiguriert ist, die Medien-Gateway-Vorrichtung (200) aufzufordern, Werte für mindestens einen Teil des weiteren RTCP-Pakets zu liefern.

8. Medien-Gateway-Steuervorrichtung (100) nach einem der Ansprüche 2 bis 7, wobei die Medien-Gateway-Steueranordnung (100) konfiguriert ist, mindestens einen festen vorbestimmten Wert für den mindestens einen Teil des weiteren RTCP-Pakets zu liefern, um die Medien-Gateway-Vorrichtung (200) aufzufordern, den mindestens einen Wert für den mindestens einen Teil der weiteren RTCP-Nachricht zu liefern.

9. Medien-Gateway-Vorrichtung (200) zum Bearbeiten mindestens einer Echtzeittransportsteuerprotokoll-Nachricht, RTCP-Nachricht, die umfasst:
eine Steuervorrichtung (203);
eine Sender/Empfänger-Vorrichtung (204);
eine Steuerschnittstellenvorrichtung (201); und
eine RTCP-Schnittstellenvorrichtung (205),
wobei die Steuervorrichtung (203) konfiguriert ist, ein Steuersignal mit einer Medien-Gateway-Steueranordnung (100) über die Steuerschnittstellenvorrichtung (201) auszutauschen,
wobei das Steuersignal geliefert wird, um die Medien-Gateway-Vorrichtung (200) zu konfigurieren, mindestens einen Teil eines RTCP-Pakets von mindestens einem durch die Medien-Gateway-Steueranordnung (100) definierten RTCP-Pakettyps an die Medien-Gateway-Steuervorrichtung (100) weiterzuleiten und
wobei die Sender/Empfänger-Vorrichtung (204) konfiguriert ist, mindestens einen Teil des RTCP-Pakets nach Empfangen des ersten RTCP-Pakets über die RTCP-Schnittstellenvorrichtung (205) über die Steuerschnittstellenvorrichtung (201) an die Medien-Gateway-Steueranordnung (100) weiterzuleiten.

10. Medien-Gateway-Vorrichtung (200) nach Anspruch 9, wobei die Sender/Empfänger-Vorrichtung (204) ferner konfiguriert ist, mindestens einen Teil eines weiteren RTCP-Pakets über die Steuerschnittstellenvorrichtung (201) zu empfangen, um den mindestens einen Teil des weiteren RTCP-Pakets zu verarbeiten und ein entsprechendes weiteres RTCP-Paket über die RTCP-Schnittstelle (205) zu senden.

11. Medien-Gateway-Vorrichtung (200) nach Anspruch 9 oder 10, wobei der mindestens eine durch die Medien-Gateway-Steueranordnung (100) definierte RTCP-Pakettyp durch mindestens einen Faktor definiert ist, der mindestens einer ist von: (i) mindestens einem Bitmuster, (ii) mindestens einer definierten Position in dem RTCP-Paket, (iii) einem H.248-Abschluss, (iv) einer Kombination eines Rückkopplungs-Nachrichtentyps und eines Nutzlast-Typs eines RTCP-Pakets, (v) einer Kombination eines Subtyps und eines Nutzlast-Typs eines RTCP-Pakets, (vi) einer Version des RTCP-Pakets und (vii) eines RTCP-"Namen"-Feldes.

12. Medien-Gateway-Vorrichtung (200) nach einem der Ansprüche 9 bis 11, wobei das Steuersignal durch mindestens eines der Folgenden ausgetauscht wird: (i) einem H.248-Ereignis in einem H.248-Add-Befehl, (ii) einem H.248-Ereignis in einem H.248-Mod-Befehl, (iii) einem H.248-Ereignis in einem H.248-Notify-Befehl oder (iv) einem H.248-Signal in einem H.248-Mod-Befehl.

13. Medien-Gateway-Vorrichtung (200) nach einem der Ansprüche 10 bis 12, wobei der mindestens eine Teil des weiteren RTCP-Pakets durch Liefern mindestens eines Wertes für mindestens einen Teil des weiteren RTCP-Pakets verarbeitet wird.

14. Medien-Gateway-Vorrichtung (200) nach einem der Ansprüche 9 bis 13, wobei der mindestens eine Teil des weiteren RTCP-Pakets ferner durch Berechnen einer Zeit, wann das weitere RTCP-Paket zu senden ist, und Senden des weiteren RTCP-Pakets zu einer solchen berechneten Zeit verarbeitet wird.

15. Verfahren zum Steuern einer Medien-Gateway-Vorrichtung (200) durch eine Medien-Gateway-Anordnung (100), das Folgendes umfasst:
Definieren mindestens eines gewünschten Echtzeittransportsteuerprotokoll-Pakettyps, RTCP-Pakettyps, durch die Medien-Gateway-Steueranordnung (100);
Austauschen eines Steuersignals zwischen der Medien-Gateway-Steueranordnung (100) und der Medien-Gateway-Vorrichtung (200), wobei das Steuersignal geliefert wird, um die Medien-Gateway-Vorrichtung zu konfigurieren, mindestens einen Teil eines RTCP-Pakets des definierten RTCP-Pakettyps an die Medien-Gateway-Steueranordnung nach Empfangen des RTCP-Pakets weiterzuleiten; und
Verarbeiten des mindestens einen Teils des RTCP-Pakets nach Empfangen des mindestens einen Teils des RTCP-Pakets über die Schnittstellenvorrichtung von der Medien-Gateway-Vorrichtung (200).

16. Verfahren nach Anspruch 15, das ferner umfasst:
Senden von mindestens einem Teil eines weiteren RTCP-Pakets über die Schnittstellenvorrichtung (104) an die Medien-Gateway-Vorrichtung (200) nach einem Auftreten eines Auslösers für das weitere RTCP-Paket.

17. Verfahren zum Bearbeiten mindestens einer Echtzeittransportsteuerprotokoll-Nachricht, RTCP-Nachricht, in einer Medien-Gateway-Vorrichtung (200), das umfasst:
Austauschen eines Steuersignals mit einer Medien-Gateway-Steueranordnung (100) über eine Steuerschnittstellenvorrichtung, wobei das Steuersignal geliefert wird, um die Medien-Gateway-Vorrichtung zu konfigurieren, mindestens einen Teil eines RTCP-Pakets des mindestens einen durch die Medien-Gateway-Steueranordnung definierten RTCP-Pakettyps an die Medien-Gateway-Steueranordnung (100) weiterzuleiten; und
Weitersenden von mindestens einem Teil des RTCP-Pakets über die Steuerschnittstellenvorrichtung an die Medien-Gateway-Steuervorrichtung (100) nach Empfangen des RTCP-Pakets des definierten Pakettyps über eine RTCP-Schnittstelle.

18. Verfahren nach Anspruch 17, das ferner umfasst:
Verarbeiten von mindestens einem Teil eines weiteren RTCP-Pakets und Senden des weiteren RTCP-Pakets über die RTCP-Schnittstelle nach Empfangen des mindestens einen Teils des weiteren RTCP-Pakets über die Steuerschnittstellenvorrichtung.

19. Computerprogrammprodukt, das Codemittel umfasst, die ausgelegt sind, die Schritte nach einem der Ansprüche 15-18 zu erzeugen, wenn es in den Speicher eines Computers geladen wird.

## Revendications

1. Un agencement de commande de passerelle multimédia (100) destiné à commander un appareil de passerelle multimédia (200), comprenant :
un dispositif de commande (101),
un dispositif émetteur-récepteur (102), et
un dispositif d'interface (104),
dans lequel le dispositif de commande (101) est configuré de façon à échanger un signal de commande avec un appareil de passerelle multimédia (200) par l'intermédiaire du dispositif d'interface (104),
dans lequel le signal de commande est fourni de façon à configurer l'appareil de passerelle multimédia (200) de façon à transmettre au moins une partie d'un paquet de protocole de commande de transport en temps réel, RTCP, d'au moins un type de paquet RTCP défini par l'agencement de commande de passerelle multimédia (100) à l'appareil de commande de passerelle multimédia (100) après réception du paquet RTCP, et
dans lequel le dispositif émetteur-récepteur (102) est configuré, après réception de la au moins une partie du premier paquet RTCP de l'appareil de commande de passerelle multimédia (100) par l'intermédiaire du dispositif d'interface (104), de façon à traiter la au moins une partie du premier paquet RTCP.

2. L'agencement de commande de passerelle multimédia (100) selon la revendication 1, dans lequel le dispositif émetteur-récepteur (102) est configuré en outre, en cas d'occurrence d'un déclencheur pour un autre paquet RTCP, de façon à envoyer au moins une partie de l'autre paquet RTCP par l'intermédiaire du dispositif d'interface (104) à l'appareil/agencement de commande de passerelle multimédia (100).

3. L'agencement de commande de passerelle multimédia (100) selon la revendication 1 ou 2, dans lequel le au moins un type de paquet RTCP défini par l'agencement de commande de passerelle multimédia (100) est défini par au moins un critère qui est au moins un critère parmi (i) au moins un modèle binaire, (ii) au moins une position définie dans le paquet RTCP, (iii) une terminaison H.248, (iv) une combinaison d'un type de message de rétroaction et d'un type de charge utile d'un paquet RTCP, (v) une combinaison d'un sous-type et un type de charge utile d'un paquet RTCP, (vi) une version du paquet RTCP, et (vii) un champ "nom" RTCP.

4. L'agencement de commande de passerelle multimédia (100) selon l'une quelconque des revendications 1 à 3, dans lequel le signal de commande est échangé par au moins un élément parmi (i) un événement H.248 dans une commande Ajouter H.248, (ii) un événement H.248 dans une commande Modifier H.248, (iii) un événement H.248 dans une commande Notifier H.248 ou (iv) un signal H.248 dans une commande Modifier H.248.

5. L'agencement de commande de passerelle multimédia (100) selon l'une quelconque des revendications 1 à 4, dans lequel la au moins une partie du paquet RTCP est au moins un paquet RTCP spécifique qui comprend au moins un élément parmi (i) des paquets RTCP spécifiques se composant d'un paquet d'indication de perte d'image, (ii) un paquet TMMBR, un paquet TMMBN ou (iii) un paquet APP.

6. L'agencement de commande de passerelle multimédia (100) selon l'une quelconque des revendications 2 à 5, comprenant en outre :
une autre interface (106),
dans laquelle se déroule au moins une opération parmi :
a. la au moins une partie du paquet RTCP est traitée par la génération d'un paquet H.245 correspondant et la transmission du paquet H.245 par l'intermédiaire de l'autre interface (106), ou
b. un déclencheur pour un autre paquet RTCP prédéfini se produit par la réception d'un paquet H.245 par l'intermédiaire de l'autre interface (106) et la génération d'au moins une partie du deuxième paquet RTCP.

7. L'agencement de commande de passerelle multimédia (100) selon l'une quelconque des revendications 2 à 6, dans lequel l'agencement de commande de passerelle multimédia (100) est configuré de façon à demander à l'appareil de passerelle multimédia (200) de fournir des valeurs pour au moins une partie de l'autre paquet RTCP.

8. L'agencement de commande de passerelle multimédia (100) selon l'une quelconque des revendications 2 à 7, dans lequel l'agencement de commande de passerelle multimédia (100) est configuré de façon à fournir au moins une valeur prédéfinie fixe pour la au moins une partie de l'autre paquet RTCP de façon à demander à l'appareil de passerelle multimédia (200) de fournir la au moins une valeur pour la au moins une partie de l'autre message RTCP.

9. Un appareil de passerelle multimédia (200) destiné à la gestion d'au moins un message de protocole de commande de transport en temps réel, RTCP, comprenant :
un dispositif de commande (203),
un dispositif émetteur-récepteur (204),
un dispositif d'interface de commande (201), et
un dispositif d'interface RTCP (205),
dans lequel le dispositif de commande (203) est configuré de façon à échanger un signal de commande avec un agencement de commande de passerelle multimédia (100) par l'intermédiaire du dispositif d'interface de commande (201),
dans lequel le signal de commande est fourni de façon à configurer l'appareil de passerelle multimédia (200) de façon à transmettre au moins une partie d'un paquet RTCP d'au moins un type de paquet RTCP défini par l'agencement de commande de passerelle multimédia (100) à l'appareil de commande de passerelle multimédia (100), et
dans lequel le dispositif émetteur-récepteur (204) est configuré, après réception du premier paquet RTCP par l'intermédiaire du dispositif d'interface RTCP (205), de façon à transmettre au moins une partie du paquet RTCP par l'intermédiaire du dispositif d'interface de commande (201) à l'agencement de commande de passerelle multimédia (100).

10. L'appareil de passerelle multimédia (200) selon la revendication 9, dans lequel le dispositif émetteur-récepteur (204) est configuré en outre de façon à recevoir au moins une partie d'un autre paquet RTCP par l'intermédiaire du dispositif d'interface de commande (201) de façon à traiter la au moins une partie de l'autre paquet RTCP et à transmettre un autre paquet RTCP correspondant par l'intermédiaire de l'interface RTCP (205).

11. L'appareil de passerelle multimédia (200) selon la revendication 9 ou 10, dans lequel le au moins un type de paquet RTCP défini par l'agencement de commande de passerelle multimédia (100) est défini par au moins un critère qui est au moins un élément parmi (i) au moins un modèle binaire, (ii) au moins une position définie dans le paquet RTCP, (iii) une terminaison H.248, (iv) une combinaison d'un type de message de rétroaction et d'un type de charge utile d'un paquet RTCP, (v) une combinaison d'un sous-type et d'un type de charge utile d'un paquet RTCP, (vi) une version du paquet RTCP et (vii) un champ "nom" RTCP.

12. L'appareil de passerelle multimédia (200) selon l'une quelconque des revendications 9 à 11, dans lequel le signal de commande est échangé par au moins un élément parmi (i) un événement H.248 dans une commande Ajouter H.248, (ii) un événement H.248 dans une commande Modifier H.248, (iii) un événement H.248 dans une commande Notifier H.248 ou (iv) un signal H.248 dans une commande Modifier H.248.

13. L'appareil de passerelle multimédia (200) selon l'une quelconque des revendications 10 à 12, dans lequel la au moins une partie de l'autre paquet RTCP est traitée par la fourniture d'au moins une valeur pour au moins une partie de l'autre paquet RTCP.

14. L'appareil de passerelle multimédia (200) selon l'une quelconque des revendications 9 à 13, dans lequel la au moins une partie de l'autre paquet RTCP est traitée en outre par le calcul d'un instant auquel transmettre l'autre paquet RTCP et la transmission de l'autre paquet RTCP audit instant calculé.

15. Un procédé destiné à commander un appareil de passerelle multimédia (200) par un agencement de commande de passerelle multimédia (100), comprenant :
la définition d'au moins un type de paquet de protocole de commande de transport en temps réel, RTCP, souhaité par l'agencement de commande de passerelle multimédia (100),
l'échange d'un signal de commande entre l'agencement de commande de passerelle multimédia (100) et l'appareil de passerelle multimédia (200), dans lequel le signal de commande est fourni de façon à configurer l'appareil de passerelle multimédia de façon à transmettre au moins une partie d'un paquet RTCP du type de paquet RTCP défini à l'agencement de commande de passerelle multimédia après réception du paquet RTCP, et
le traitement d'au moins une partie du paquet RTCP, après réception de la au moins une partie du paquet RTCP par l'intermédiaire du dispositif d'interface, à partir de l'appareil de passerelle multimédia (200).

16. Le procédé selon la revendication 15, comprenant en outre :
la transmission d'au moins une partie d'un autre paquet RTCP par l'intermédiaire du dispositif d'interface (104) à l'appareil de passerelle multimédia (200), après occurrence d'un déclencheur, pour l'autre paquet RTCP.

17. Un procédé destiné à la gestion d'au moins un message de protocole de commande de transport en temps réel, RTCP, dans un appareil de passerelle multimédia (200), comprenant :
l'échange d'un signal de commande avec un agencement de commande de passerelle multimédia (100) par l'intermédiaire d'un dispositif d'interface de commande, dans lequel le signal de commande est fourni de façon à configurer l'appareil de passerelle multimédia de façon à transmettre au moins une partie d'un paquet RTCP d'au moins un type de paquet RTCP défini par l'agencement de commande de passerelle multimédia à l'agencement de commande de passerelle multimédia (100), et
la transmission d'au moins une partie du paquet RTCP par l'intermédiaire du dispositif d'interface de commande à l'agencement de commande de passerelle multimédia (100) après réception du paquet RTCP du type de paquet défini par l'intermédiaire d'une interface RTCP.

18. Un procédé selon la revendication 17, comprenant en outre :
le traitement d'au moins une partie d'un autre paquet RTCP et la transmission de l'autre paquet RTCP par l'intermédiaire de l'interface RTCP, après réception de la au moins une partie de l'autre paquet RTCP, par l'intermédiaire du dispositif d'interface de commande.

19. Un produit de programme informatique comprenant un moyen de code adapté de façon à produire les étapes selon l'une quelconque des revendications 15 à 18 lorsqu'il est chargé dans la mémoire d'un ordinateur.
